Europäisches Patentamt

European Patent Office

Office européen des brevets

(11) Veröffentlichungsnummer: **0 220 414**
**A2**

## (12) EUROPÄISCHE PATENTANMELDUNG

(21) Anmeldenummer: **86111703.4**

(22) Anmeldetag: **23.08.86**

(51) Int. Cl.⁴: **B60J 5/04**

(30) Priorität: **19.10.85 DE 3537304**

(43) Veröffentlichungstag der Anmeldung:
**06.05.87 Patentblatt 87/19**

(84) Benannte Vertragsstaaten:
**DE FR GB IT NL SE**

(71) Anmelder: **Dr.Ing.h.c. F. Porsche
Aktiengesellschaft
Porschestrasse 42
D-7000 Stuttgart 40(DE)**

(72) Erfinder: **Bott, Helmuth, Prof.
Ritterstrasse 2
D-7530 Pforzheim(DE)**

(54) **Aufbau für Personenwagen.**

(57) Dieser Aufbau umfasst an wenigstens einer Längsseite zwei nebeneinander angeordnete Türen, wobei beide einander zugekehrte Türbegrenzungen ohne Zwischenschaltung einer festen Aufbausäule zusammengesetzt sind. Die Türen sind an entfernt von den Türbegrenzungen liegenden Säulen des Aufbaus mittels Scharnieren angelenkt.

Zum Schutz gegen unachtsames Öffnen der hinteren Tür wirken beide Türen in der Weise zusammen, daß erst nach Öffnen der vorderen Tür die hintere Tür zu öffnen ist.

FIG.1

EP 0 220 414 A2

## Aufbau für Personenwagen

Die Erfindung betrifft einen Personenwagen in Coupé-Form mit einem Fließheck, der an wenigstens einer Längsseite zwei nebeneinander angeordnete Türen aufweist, wobei die Türen an jeweils entfernt von benachbarten, aufrecht von oben nach unten verlaufenden Türbegrenzungen stehenden Säulen des Aufbaues mittels Scharnieren angelenkt sind.

Bei einem bekannten Aufbau (DE-PS 681 725) der eingangs genannten Gattung kann die hintere Tür bei geschlossener vorderer Tür geöffnet werden. Dies hat den Nachteil, daß die an der C-Säule angeschlagene hintere Tür bei unachtsamem Öffnen während der Fahrt durch den Druck des Fahrtwinds aufgerissen werden kann. Dadurch sind nicht nur die Fahrgäste des derart ausgebildeten Fahrzeugs, sondern auch ihm entgegenkommende andere Verkehrsteilnehmer gefährdet.

Die Aufgabe der Erfindung besteht darin, die vorstehenden Nachteile zu vermeiden.

Erfindungsgemäß werden diese Nachteile durch die kennzeichnenden Merkmale des Anspruchs 1 gelöst. Weitere, die Erfindung ausgestaltende Merkmale enthalten die Unteransprüche.

Die mit der Erfindung hauptsächlich erzielten Vorteile sind darin zu sehen, daß ein unachtsames Öffnen der hinteren Tür, das eine Gefährdung der Fahrgäste des Personenwagens und anderer Verkehrsteilnehmer zur Folge haben kann, sicher vermieden wird. Die Art des Anschlagens der hinteren Tür und der Verzicht einer Aufbausäule zwischen den beiden Türen ermöglicht, auch bei einem Sportwagen mit Fließheck ein bequemes Einsteigen der die Rücksitzanlage benutzenden Fahrgäste. Die mit dem Dachrahmen und dem Bodenrahmen zusammenwirkenden Verriegelungsvorrichtungen gewährleisten einen guten Halt der Türen in ihrer geschlossenen Stellung. Durch das einzige Scharnier und das Hebelwerk der hinteren Tür ergeben sich viele Gestaltungsmöglichkeiten einer Türöffnung, insbesondere in Verbindung mit einem ein Fließheck aufweisenden Sportwagen.

In der Zeichnung wird ein Ausführungsbeispiel der Erfindung gezeigt, das nachstehend näher beschrieben ist.

Es zeigt

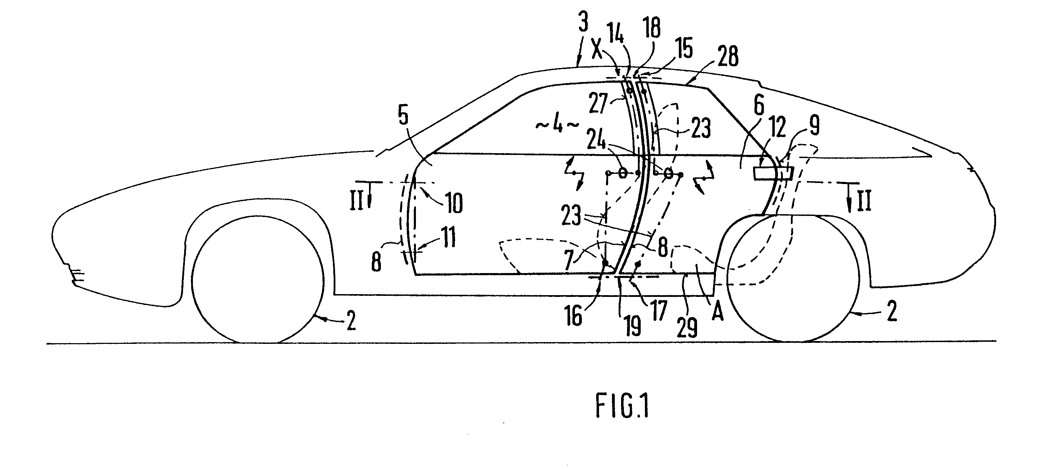

Fig. 1 eine Seitenansicht eines Sportwagens mit Fließheck,

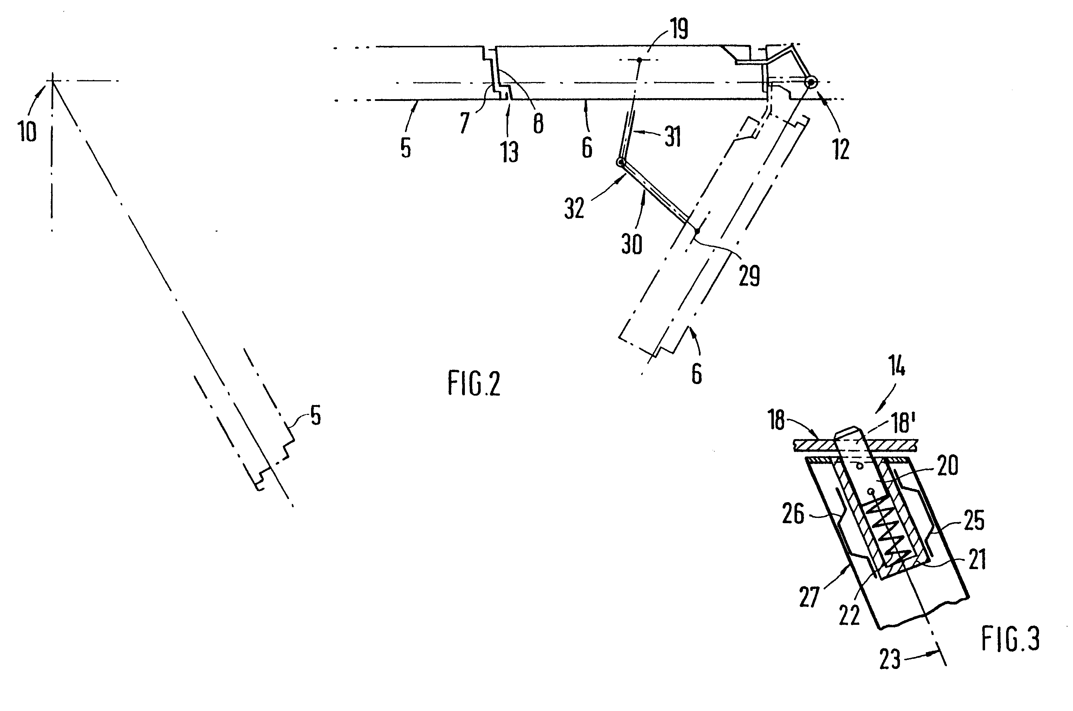

Fig. 2 einen Schnitt nach der Linie II-II der Fig. 1 in größerem Maßstab,

Fig. 3 eine Einzelheit X der Fig. 1 in größerem Maßstab.

Der Personenwagen 1 -er hat die Form eines Sportcoupés mit einem Fließheck -umfasst Räder 2 und einen Aufbau 3. Ein Fahrgastraum 4 des Aufbaus 3 ist über jeweils zwei an den Längsseiten von diesem vorgesehenen Türen 5 und 6 zugänglich. Die Türen 5, 6 sind nebeneinander angeordnet und weisen benachbart, aufrecht von oben nach unten verlaufende Türbegrenzungen 7 bzw. 8 auf. Entfernt von diesen Türbegrenzungen 7, 8 sind die Türen 5, 6 an Säulen 8, 9 des Aufbaus 3 angelenkt. Hierzu dienen Scharniere 10, 11 und 12.

Die Türbegrenzungen 7, 8 sind ohne Zwischenschaltung einer festen Aufbausäule zusammengesetzt, wodurch die Türöffnung, die beide Türen umgibt, einen guten Zugang zum Fahrgastraum 4, insbesondere zu dessen Rücksitzanlage - (A), ermöglicht.

Beide Türen wirken in der Weise zusammen, daß erst nach Öffnen der vorderen Tür 5 die hintere Tür 6 zu öffnen ist. Hierzu übergreift in der geschlossenen Stellung der Türen -in Fahrzeuglängsrichtung gesehen -ein Vorsprung 13 die Türbegrenzung 7 der vorderen Tür 5 die Türbegrenzung 8 der hinteren Tür 6.

Zur Halterung der Türen 5, 6 in ihrer geschlossenen Stellung dienen Verriegelungsvorrichtungen 14, 15 und 16, 17, die mit einem Dachrahmen 18 bzw. einen Bodenrahmen 19 des Aufbaus 3 zusammenwirken.

Jede Verriegelungsvorrichtung 14 umfasst einen türseitigen Bolzen 20, der in eine Aufnahme 18' des Dachrahmens 18 eingreift. Der Bolzen 20 ist axialbeweglich in einer Führung 21 gelagert und stützt sich an einer Druckfeder 22 ab. Über eine Übertragungseinrichtung 23, die durch ein Gestänge, Bowdenzug o. dgl. gebildet werden kann, ist der Bolzen 20 an eine elektromotorische oder manuell bedienbare Betätigungsvorrichtung 24 angeschlossen. Die Betätigungsvorrichtung ist vom Fahrgastraum aus und von der Fahrzeugaußenseite her zugänglich.

Die Führung 21 der Verriegelungsvorrichtung 14 ist unter Vermittlung von Stützgliedern 25, 26 in einem Rahmen 27 untergebracht, der fest mit der Tür 5 verbunden ist. Eine vergleichbare Ausführung weist die Tür 6 auf.

Das Scharnier 12 der hinteren Tür 6 ist etwa in der Mitte zwischen der oberen Türbegrenzung 28 und der Türbegrenzung 29 angeordnet. Neben diesem einzigen Scharnier 12 arbeitet die hintere Tür 6 lediglich noch mit einem zwei Hebel 30, 31 umfassenden Hebelwerk 32 zusammen. Das Hebelwerk 32 ist am Bodenrahmen 19 und an der unteren Türbegrenzung 29 gelagert und hat sowohl eine die Tür 6 führende wie auch sie stützende Funktion.

## Ansprüche

1. Aufbau für Personenwagen, vorzugsweise Sportwagen in Coupé-Form mit einem Fließheck, der an wenigstens einer Längsseite zwei nebeneinander angeordnete Türen aufweist, wobei die Türen jeweils entfernt von benachbarten, aufrecht von oben nach unten verlaufenden Türbegrenzungen stehenden Säulen des Aufbaus mittels Scharnieren angelenkt sind, dadurch gekennzeichnet, daß beide Türen (5, 6) vorzugsweise über ihre benachbarten Türbegrenzungen (7, 8) in der Weise zusammenwirken, daß erst nach Öffnen der vorderen Tür (5) die hintere Tür (6) zu öffnen ist.

2. Aufbau nach Anspruch 1, dadurch gekennzeichnet, daß beide Türbegrenzungen (7, 8) ohne Zwischenschaltung einer festen Säule des Aufbaues (3) zusammengesetzt sind, wobei in der geschlossenen Stellung der Türen (5, 6) die Türbegrenzung (7) der vorderen Tür mit einem Vorsprung (13) die Türbegrenzung (8) der hinteren Tür (6) zumindest örtlich übergreift.

3. Aufbau nach den Ansprüchen 1 und 2, dadurch gekennzeichnet, daß beide Türen (5, 6) über Verriegelungsvorrichtungen (14, 15, 16, 17) in ihrer geschlossenen Stellung gehalten werden, die mit einem Dachrahmen (18) und einem Bodenrahmen (19) des Aufbaus (3) zusammenwirken.

4. Aufbau nach Anspruch 3, dadurch gekennzeichnet, daß jede Verriegelungsvorrichtung (14) einen türseitigen Bolzen (20) umfasst, der in eine Aufnahme (18') des Dachrahmens (18) bzw. Bodenrahmens (19) eingreift.

5. Aufbau nach Anspruch 4, dadurch gekennzeichnet, daß der Bolzen (20) mittels einer Übertragungseinrichtung (23), wie z.B. Gestänge, Bowdenzug o.dgl., an eine Betätigungsvorrichtung - (24) angeschlossen ist.

6. Aufbau nach Anspruch 1, dadurch gekennzeichnet, daß die hintere Tür mittels einem etwa in der Mitte zwischen der oberen Türbegrenzung - (28) sowie der unteren Türbegrenzung (29) angebrachten Scharnier (12) und einem zwischen dem Bodenrahmen (19) sowie der unteren Türbegrenzung (29) wirkenden Hebelwerk (32) angelenkt ist.

FIG.1

FIG.2

FIG.3